Europäisches Patentamt

European Patent Office

Office européen des brevets

(11) Publication number: **0 214 309**
**A1**

(12) **EUROPEAN PATENT APPLICATION**
published in accordance with Art. 158(3) EPC

(21) Application number: 86902000.8

(22) Date of filing: 05.03.86

Data of the international application taken as a basis:

(86) International application number:
PCT/JP86/00112

(87) International publication number:
WO86/05335 (12.09.86 86/20)

(51) Int. Cl.⁴: **H 02 P 5/00**
**G 05 D 3/12**

(30) Priority: 06.03.85 JP 43940/85

(43) Date of publication of application:
18.03.87 Bulletin 87/12

(84) Designated Contracting States:
DE FR GB

(71) Applicant: FANUC LTD
3580, Shibokusa Aza-Komanba Oshino-mura
Minamitsuru-gun Yamanashi 401-05(JP)

(72) Inventor: KURAKAKE, Mitsuo Izumi-Haitsu 103
3-10, Tamadaira 3-chome Hino-shi
Tokyo 191(JP)

(74) Representative: Billington, Lawrence Emlyn et al,
HASELTINE LAKE & CO Hazlitt House 28 Southampton
Buildings Chancery Lane
London WC2A 1AT(GB)

(54) SYSTEM FOR CONTROLLING A SERVO MOTOR.

(57) A system for controlling a servo motor, which controls a servo motor (2) by an acceleration/deceleration control unit (1). The system is provided with a torque detector (7) which detects the torque when it exceeds a limit value while the servo motor is in acceleration operation. When the torque exceeds the limit value, the acceleration/deceleration control unit (1) works to decrease the acceleration, so that the servo motor is prevented from stopping unnecessarily.

Fig. 1

EP 0 214 309 A1

**0214309**

-1-

## DESCRIPTION

### SERVOMOTOR CONTROL SYSTEM

<u>Technical Field</u>

This invention relates to a servomotor control system and, more particularly, to a servomotor control system well-suited for driving the movable element of a machine tool, a robot or the like.

<u>Background Art</u>

At factories where a large quantity of products are manufactured automatically through an integrated production process as is carried out at automobile manufacturing plants, a number of industrial robots arranged along the production line automatically execute their tasks as taught to manufacture the products in assembly line fashion. In a system for controlling the velocity of servomotors that drive these industrial robots, a limiting function is provided for exercising control in such a manner that a torque command applied to a servomotor during acceleration does not exceed a maximum value of torque decided by the servomotor and a servoamplifier. When an excessive torque command is generated and applied to the respective industrial robots constituting the production line, the torque limiting function acts to generate an alarm and stop the robots to protect these servomotors and servoamplifiers from damage.

When the industrial robots are taught their motions, each industrial robot is actually held under a

-2-

load and is taught at a low velocity to assure the safety of the human being doing the teaching.

When the industrial robots constituting the production line operate in concert based on the data that they have been taught, each industrial robot actually operates under the load of a workpiece and the velocity of robot motion differs from that which prevailed during teaching. There are also cases where the weight of the load differs somewhat from that at teaching. Frequently, therefore, the torque developed at acceleration of the servomotor will exceed the set torque limit value. When the torque of the servomotor exceeds the torque limit value even slightly, the aforementioned torque limiting function acts to issue the alarm and halt the operation of the industrial robot in order to prevent a hazardous situation.

In cases such as the above, the flow of materials on the production line ceases when even one of the industrial robots stops, thus causing a halt in the work performed by the entire production line.

Since work on the production line is thus halted due to a slight difference between the conditions during teaching and those during operation, there is a decline in the productivity of a plant of the type in which a large quantity of products are produced automatically through an integrated process.

Disclosure of the Invention

The present invention has been devised in order to

-3-

solve the aforementioned problem and its object is to provide a servomotor control system in which a driving servomotor used in an industrial robot or the like will not be stopped immediately if the torque exceeds the limit value to a small extent during acceleration of the servomotor.

The aforementioned object of the invention is attained by a servomotor control system for driving and controlling a servomotor by an acceleration/deceleration command, characterized by having an acceleration/deceleration controller for setting any commanded velocity in response to an external command and outputting an acceleration/deceleration command to the servomotor, a torque sensor for sensing that a torque based on a load of the servomotor has exceeded a limit value during an accelerating operation of the servomotor at the commanded velocity decided by the acceleration/deceleration controller, and means for altering the acceleration/deceleration command from the acceleration/deceleration controller in a direction that reduces acceleration when a torque which has exceeded the limit value has been sensed by the torque sensor.

In accordance with the servomotor control system of the present invention, it is sensed whether the torque exceeds the limit value during the acceleration of the servomotor in response to the acceleration/deceleration command from the acceleration/deceleration controller. When the torque exceeds the limit value, control is performed in such a manner that the acceleration is reduced by the acceleration/deceleration controller. This makes it possible to avoid unnecessary stopping of a robot without damaging the motor or amplifier.

Brief Description of the Drawings

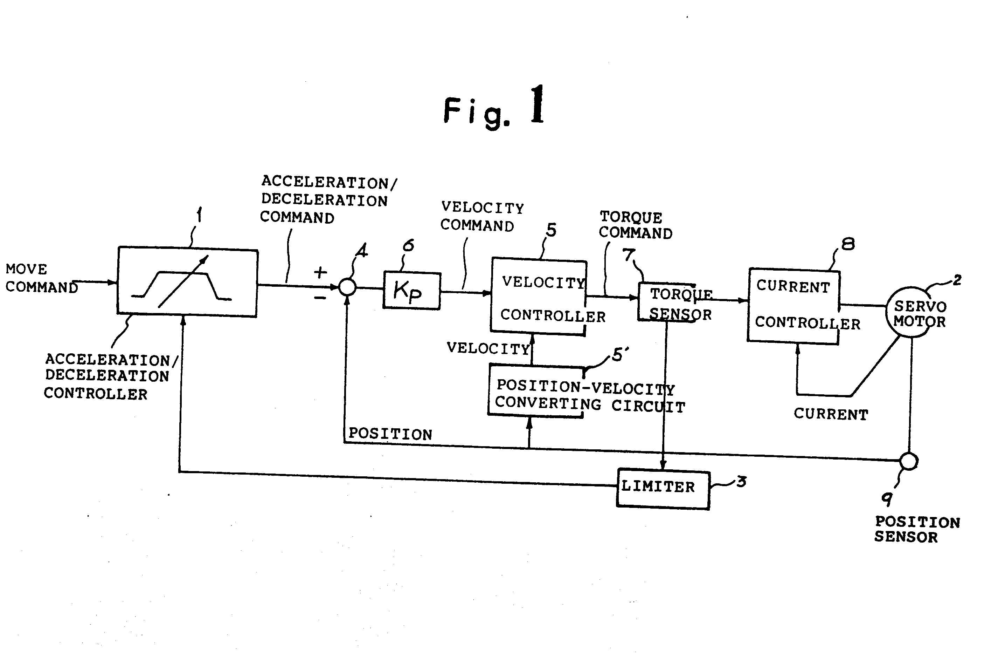

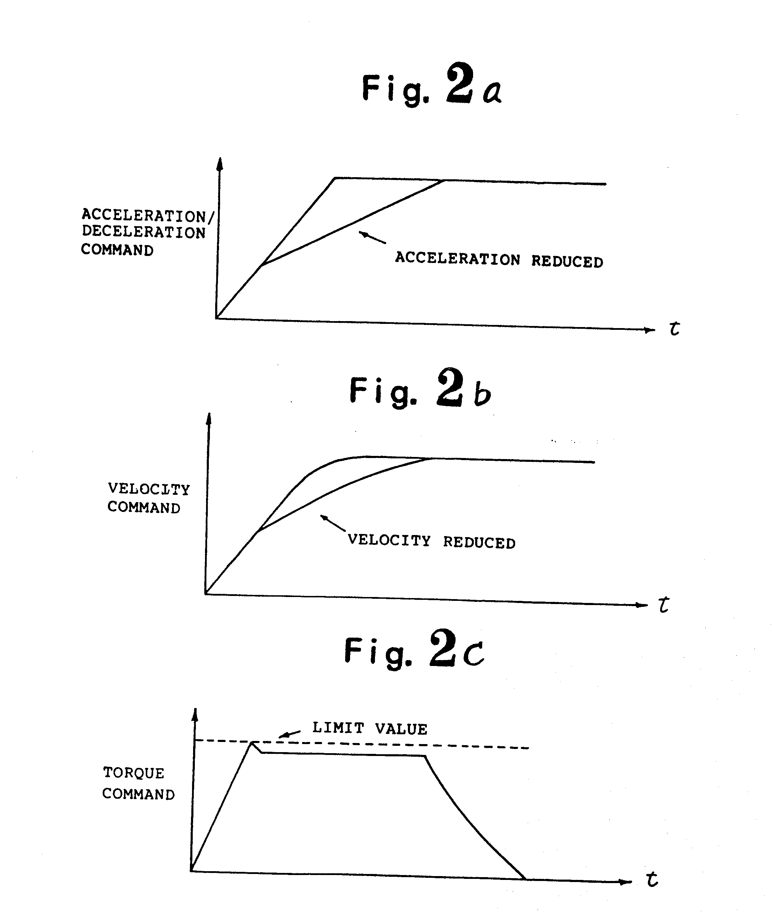

Fig. 1 is a block diagram embodying the present invention, and Figs. 2a, 2b and 2c are views respectively illustrating an acceleration command, velocity command and torque command in the block diagram of Fig. 1.

Best Mode for Carrying Out the Invention

An embodiment of the present invention will now be described in detail with reference to the drawings.

In Fig. 1, numeral 1 denotes an acceleration/deceleration controller. The acceleration/deceleration controller 1 is e.g. a linear accelerating/decelerating circuit used conventionally in the control circuit of a servomotor 2 and is capable of altering and setting an acceleration/deceleration command in response to a command from a limiter 3, described below. The acceleration/deceleration controller 1 receives a move command produced by an input command decoding circuit or the like in a robot controller in response to input data applied to the robot controller. The servomotor 2 is driven and controlled by a velocity command produced by the acceleration/deceleration controller 1.

The acceleration/deceleration command from the acceleration/deceleration controller 1 is applied to an arithmetic circuit 4, which also receives a position signal fed back from the servomotor 2. Numeral 5 denotes a velocity controller for controlling the velocity of the servomotor 2, using as a reference a velocity command supplied by the arithmetic circuit 4 via an amplifier circuit 6.

A torque sensor 7 is set to a torque limit value conforming to the rating of the servomotor 2 and of an output transistor used in a current controller 8, described below. The sensor 7 senses a torque command from the velocity controller 5 and applies a predetermined current control command to the current controller 8 to drive and control the servomotor 2. When the torque sensor 7 senses a torque that has exceeded the limit value, the limiter 3 alters the acceleration/deceleration command from the acceleration/deceleration controller 1 in a direction that reduces acceleration. It should be noted that the components from the limiter 3 to the current controller 8 may be implemented by software run by a microprocessor.

The servomotor control circuit composed of the acceleration/deceleration controller 1, velocity controller 5, limiter 3 and the like is so provided as to perform prescribed feedback control with regard to current, position and velocity for each servomotor 2 of a robot, and it drives and controls the servomotor 2 based on a feedback signal from a position sensor 9 of the servomotor 2.

In the present invention, when the output of the velocity controller 5, namely a torque command indicating a torque value, exceeds a prescribed limit value, this is sensed by the torque sensor 7, which informs the acceleration/deceleration controller 1 of the fact via the limiter 3 so that control is performed in a direction that reduces acceleration. More specifically, Fig. 2 illustrates the characteristics of the acceleration/deceleration command, velocity command and torque command in a case where such control is performed. When the torque command attains a torque limit value, which is indicated by the dashed line in Fig. 2c, the slope of the commanded velocity is reduced is a direction that will diminish the acceleration, as shown in Fig. 2a. Accordingly, velocity is also reduced in the velocity controller 5, as shown in Fig. 2b. Thus, even if the torque command should exceed the limit value when the robot is operated based on taught data, the acceleration/deceleration command is modified to limit the torque during the accelerating operation. This makes it possible to avoid stopping the robot unnecessarily.

It should be noted that a deviation in the stopping position can be prevented in a reliable manner by arranging it so that the amount of deceleration carried out during the accelerating operation is compensated for during operation at a constant velocity or during a decelerating operation. Further, the present invention is not limited to the above-described embodiment and similarly outstanding effects can be obtained even in a common servomotor control system having an acceleration/deceleration control function.

Industrial Applicability

According to the servomotor control system of the present invention, a servomotor control system for driving and controlling a servomotor by an acceleration/deceleration controller is provided with a torque sensor for sensing that torque has exceeded a limit value during the accelerating operation of the servomotor, and the system is so arranged that acceleration is reduced by the acceleration/deceleration controller when the torque exceeds the limit value. It is therefore possible to avoid stopping the servomotor unnecessarily. Accordingly, the control system of the invention is well-suited for application to a number of industrial robots arranged on a production line at a plant where a large number of products are produced automatically through an integrated operation.

CLAIMS:

(1)   A servomotor control system for driving and controlling a servomotor by an acceleration/deceleration command, comprising:

an acceleration/deceleration controller for setting any commanded velocity in response to an external command and outputting an acceleration/deceleration command to the servomotor;

a torque sensor for sensing that a torque based on a load of the servomotor has exceeded a limit value during an accelerating operation of the servomotor at the commanded velocity decided by said acceleration/deceleration controller; and

torque limiting means for altering the acceleration/deceleration command from said acceleration/deceleration controller in a direction that reduces acceleration when a torque which has exceeded the limit value has been sensed by said torque sensor.

(2)   A servomotor control system according to claim (1), characterized in that said torque limiting means is a limiter constituted by software run by a microprocessor.

(3)   A servomotor control system according to claim (1), characterized in that said servomotor has a feedback control loop for current, position and velocity.

(4)   A servomotor control system according to claim (1), characterized in that said acceleration/decelera-tion controller has a function which compensates for an amount of deceleration, which is performed during the accelerating operation, during a constant velocity operation or decelerating operation.

# Fig. 1

MOVE COMMAND

ACCELERATION/ DECELERATION COMMAND

VELOCITY COMMAND

TORQUE COMMAND

1 — ACCELERATION/ DECELERATION CONTROLLER

+ —

4

6 $K_P$

5 VELOCITY CONTROLLER

7 TORQUE SENSOR

8 CURRENT CONTROLLER

2 SERVO MOTOR

VELOCITY

5' POSITION-VELOCITY CONVERTING CIRCUIT

POSITION

CURRENT

LIMITER 3

9 POSITION SENSOR

# Fig. 2a

ACCELERATION/
DECELERATION
COMMAND

ACCELERATION REDUCED

$t$

# Fig. 2b

VELOCITY
COMMAND

VELOCITY REDUCED

$t$

# Fig. 2c

LIMIT VALUE

TORQUE
COMMAND

$t$

# INTERNATIONAL SEARCH REPORT

0214309

International Application No. PCT/JP86/00112

**I. CLASSIFICATION OF SUBJECT MATTER** (if several classification symbols apply, indicate all) ³

According to International Patent Classification (IPC) or to both National Classification and IPC

Int.Cl$^4$    H02P5/00, G05D3/12

**II. FIELDS SEARCHED**

| Minimum Documentation Searched ⁴ | |
|---|---|
| Classification System | Classification Symbols |
| IPC | H02P5/00<br>G05D3/12 |

| Documentation Searched other than Minimum Documentation<br>to the Extent that such Documents are Included in the Fields Searched ⁵ | |
|---|---|
| Kokai Jitsuyo Shinan Koho | 1971 - 1985 |
| Jitsuyo Shinan Koho | 1960 - 1985 |

**III. DOCUMENTS CONSIDERED TO BE RELEVANT** ¹⁴

| Category* | Citation of Document, ¹⁶ with indication, where appropriate, of the relevant passages ¹⁷ | Relevant to Claim No. ¹⁸ |
|---|---|---|
| X | JP, A, 51-18809 (Yasaka Seiki Kabushiki Kaisha) 14 February 1976 (14. 02. 76) (Family: none) | 1 |
| Y | JP, A, 51-18809 (Yasaka Seiki Kabushiki Kaisha) 14 February 1976 (14. 02. 76) (Family: none) | 2, 3, 4 |
| Y | JP, A, 57-34209 (Toshiba Corp.) 24 February 1982 (24. 02. 82) (Family: none) | 2, 3 |
| Y | JP, A, 56-80857 (Fujitsu Ltd.) 2 July 1981 (02. 07. 81) (Family: none) | 2, 3, 4 |

* Special categories of cited documents: ¹⁵

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance: the claimed invention cannot be considered novel or cannot be considered to involve an inventive step

"Y" document of particular relevance: the claimed invention cannot be considered to involve an inventive step when the document is combined with one or more other such documents, such combination being obvious to a person skilled in the art

"&" document member of the same patent family

**IV. CERTIFICATION**

| Date of the Actual Completion of the International Search ² | Date of Mailing of this International Search Report ² |
|---|---|
| May 22, 1986 (22. 05. 86) | June 2, 1986 (02. 06. 86) |
| International Searching Authority ¹ | Signature of Authorized Officer ²⁰ |
| Japanese Patent Office | |

Form PCT/ISA/210 (second sheet) (October 1981)